# EUROPÄISCHE PATENTANMELDUNG

(11) **EP 4 596 518 A1**
(43) Veröffentlichungstag der Anmeldung: **06.08.2025**
(21) Anmeldenummer: 24219158.3
(22) Anmeldetag: 11.12.2024
(51) Int. Cl.: C04B 28/02, B09B 3/32, B09B 3/40, C09C 1/50, C04B 18/02, C01B 32/30, C01B 32/324, C10B 53/02, C10B 53/07, C09C 1/48, B29B 17/04, B29B 17/00, C04B 18/10, C04B 26/26

(54) **VERFAHREN ZUR AUFBEREITUNG VON PPK-KUNSTSTOFF-VERBUNDMATERIAL SOWIE VERWENDUNG VON MIT DEM VERFAHREN HERGESTELLTEN AGGLOMERATEN**

(30) Priorität: 11.01.2024 DE 102024100765; 23.09.2024 DE 202024105453 U
(71) Anmelder: Lobbe Holding GmbH & Co KG, 58644 Iserlohn (DE)
(72) Erfinder: Sadowski, Simon, 45966 Gladbeck (DE)
(74) Vertreter: Haverkamp Patentanwälte PartG mbB

(57) **Zusammenfassung**

Beschrieben ist ein Verfahren zur Aufbereitung von PPK-Kunststoff-Verbundmaterial, wie Verbundverpackungen aus Siedlungsabfall, mit folgenden Schritten:
- Sortieren eines Primärmaterials und Bereitstellen einer für die weitere Verarbeitung vorgesehenen, zumindest weitgehend nur PPK und Kunststoff enthaltenden Rohstofffraktion mit einem gegenüber dem Kunststoffanteil höheren PPK-Anteil,
- Zerkleinern der Rohstofffraktion und
- Herstellen von Agglomeraten durch Verdichten der zerkleinerten Rohstofffraktion.

Beschrieben ist ferner eine Verwendung der mit dem Verfahren hergestellten Agglomerate als Bauzuschlagstoff.

## Beschreibung

Gegenstand der Erfindung ist ein Verfahren zur Aufbereitung von PPK-Kunststoff-Verbundmaterial, insbesondere von ausgedientem PPK-Kunststoff-Verbundmaterial sowie eine Verwendung von mit dem Verfahren hergestellten Agglomeraten.

PPK-Kunststoff-Verbundmaterial fällt vor allem in getrennt gesammeltem Siedlungsabfall (Hausmüll, Verpackungsabfall) in großem Maße an. Derartiges Verbundmaterial umfasst eine aus einem oder mehreren Kunststoffarten bestehende Kunststoffkomponente, eine Papier-, Pappe- oder Kartonkomponente und mitunter auch eine Metallkomponente, typischerweise Aluminium. Aus der Papier-, Pappe- oder Kartonkomponente resultiert die Abkürzung PPK (Papier, Pappe, Karton). Derartiges Verbundmaterial befindet sich vor allem in Verbundverpackungen, typischerweise Leichtverpackungen. Bei derartigen Verbundmaterialien sind die einzelnen Komponenten in einem Verbund miteinander angeordnet, typischerweise miteinander laminiert. In den meisten Fällen wird diese Fraktion des Siedlungsabfalls als Brennstoff thermisch verwertet, beispielsweise durch Nutzen der durch die Verbrennung entstehenden Wärme zum Speisen eines Fernwärmenetzes, da eine anderweitige Verwertung sehr aufwändig ist. Als nicht unproblematisch wird bei einer solchen Verwertung von PPK-Kunststoff-Verbundmaterial die damit einhergehende CO₂-Emmission angesehen. Eine derartige Verwertung von PPK-Kunststoff-Verbundmaterial ist für den Entsorger mit Kosten verbunden, da sich die derartiges Verbundmaterial thermisch verwertenden Unternehmen die Abnahme dieses Materials bezahlen lassen.

Bekannt sind auch nasschemische Verfahren, um derartiges Verbundmaterial zu recyceln. Bei diesem steht im Vordergrund, die Einzelbestandteile des Verbundes einem Recycling zuzuführen. Gemäß einem vorbekannten Verfahren wird eine Trennflüssigkeit eingesetzt, um nach einem vorangegangenen Zerkleinerungsschritt den Materialverbund aufzubrechen, damit die einzelnen Komponenten voneinander gelöst sind. Die auf diese Weise voneinander getrennten Bestandteile PPK und Kunststoff können anschließend jeweils für sich alleine recycelt werden. Nasschemische Verfahren sind jedoch aufwendig, da diese Chemikalien sowie größere Mengen an Waschwasser benötigen. Ferner ist es erforderlich, die zurückgewonnen Materialfraktionen zu trocknen, bevor diese recycelt werden können. Ein nasschemisches Verfahren ist beispielsweise aus EP 4 067 423 A1 bekannt. Die mit dem nasschemischen Trennverfahren zurückgewonnene Zellulose kann für die Herstellung von Recyclingpapier genutzt werden. PPK-Kunststoff-Verbundmaterial aus Siedlungsabfällen ist in vielen Fällen geruchsbelastet. Die Geruchsbelastung lässt sich durch nasschemische Aufbereitung des Verbundmaterials nicht oder jedenfalls nicht gänzlich beseitigen, sodass ein damit hergestelltes Recyclingprodukt oftmals nicht frei von Gerüchen der Primärverwendung ist. Bei diesem Verfahren fällt zudem Prozessabwasser in großen Mengen an, welches gesondert entsorgt werden muss.

In DE 44 16 340 A1 wird vorgeschlagen, PPK-Kunststoff-Verbundmaterial pyrolytisch aufzuschließen, um daraus als Pyrolyseprodukt Aktivkohle zu gewinnen. Das PPK-Kunststoff-Verbundmaterial wird zu diesem Zweck pyrolisiert, mithin unter Sauerstoffabschluss oder zumindest mit einem signifikanten Sauerstoffunterschuss thermisch behandelt. Anschließend wird die im Pyrolyseprodukt enthaltene Metallfraktion von der kohlenstoffreichen Fraktion getrennt, beispielsweise durch Sieben. Um diesen Vorgang vorzubereiten wird das Pyrolysegut während der Pyrolyse homogenisiert und zerkleinert. Die Pyrolyse wird bei Temperaturen von maximal 450°C und damit als Niedertemperaturpyrolyse durchgeführt. Die anschließende Aufbereitung der kohlenstoffreichen Fraktion als Pyrolyseprodukt zum Herstellen von Aktivkohle erfolgt mit konventionellen Verfahren.

In der Asphaltindustrie - gleiches gilt auch für andere Baustoffe, wie beispielsweise Beton - werden Zuschlagstoffe eingesetzt. Die Zuschlagstoffe verleihen dem jeweiligen Baustoff zusätzliche Eigenschaften, können beispielsweise eine stabilisierende Wirkung auf den Baustoff haben. Für hochbelastete Asphaltsorten, die bei immer geringeren Temperaturen verarbeitet werden, muss ein Asphaltmischgut mit besonderen, abgestimmten Anteilen in Asphaltmischwerken hergestellt werden. Dieses Gemisch besteht im Wesentlichen aus feinen und groben Gesteinskörnungen sowie Bitumen als Bindemittel. Gegebenenfalls können Zusätze enthalten sein, die in geringen Mengen zugegeben werden um die Eigenschaften zu verbessern. Hochbelastete Asphaltmischungen, wie zum Beispiel Splitmastixasphalt, enthalten einen hohen Anteil an groben Kornklassen und entsprechend muss ein hoher Anteil an Bindemitteln zugesetzt werden. Dadurch werden die Hohlräume weitgehend durch Bitumenmörtel ausgefüllt. Zur Verhinderung von Entmischungsvorgängen beim Mischen, Transportieren, Einbauen und beim Verdichten werden Bindemittelträger eingesetzt. Diese stabilisieren die Mischung und verhindern ein Ablaufen des Bindemittels von den Mineralstoffen. Ein derartiger Zuschlagstoff ist in EP 1 520 932 A2 beschrieben und besteht aus Hanf, Flachs/Kultur-Lein. Vorgeschlagen wird in diesem Stand der Technik, dieses Material als Faserzusatz entweder in das in dem Asphaltmischer befindliche Gemisch oder in Form von zuvor hergestellten Pellets einzubringen. Im Falle von Pellets werden die Fasern mit einer Melasse als Bindemittel versetzt, bevor diese zu Pellets gepresst werden. Durch das Bindemittel erhalten die Pellets die notwendige Stabilität für die Handhabung und spätere Verwendung.

Bekannt ist auch, einen derartigen Bauzuschlagstoff für Asphalte aus Altpapier herzustellen, wobei für das Erstellen von Agglomeraten in Pelletform ebenfalls ein Bindemittel zugesetzt wird.

Auch wenn mit diesem vorbekannten Bauzuschlagstoff die gewünschten Ziele bei der Anwendung erreicht werden, wäre es dennoch wünschenswert, wenn insbesondere auch unter Nachhaltigkeitsgesichtspunkten nicht unbedingt Kulturpflanzen oder auch für andere Zwecke verwertbares Altpapier eingesetzt werden müssten und wenn der Bauzuschlagstoff sich zudem mit geringerem Aufwand herstellen ließe.

Ausgehend von dem vorstehend diskutierten Stand der Technik liegt der Erfindung die Aufgabe zugrunde, ein Verfahren zur Wiederverwendung von ausgedientem PPK-Kunststoff-Verbundmaterial vorzuschlagen, welches für den Entsorger kostengünstiger und bezüglich des damit hergestellten Produktes hinsichtlich seiner Eigenschaften an eine vorgesehene Weiterverwendung angepasst ist, herkömmliche Produkte ersetzen kann und unter Nachhaltigkeitsgesichtspunkten Vorteile hat.

Gelöst wird die verfahrensbezogene Aufgabe durch ein Verfahren zur Aufbereitung von PPK-Kunststoff-Verbundmaterial, wie Verbundverpackungen aus Siedlungsabfall, mit folgenden Schritten:
- Sortieren eines Primärmaterials und Bereitstellen einer für die weitere Verarbeitung vorgesehenen, zumindest weitgehend nur PPK und Kunststoff enthaltenden Rohstofffraktion mit einem gegenüber dem Kunststoffanteil höheren PPK-Anteil,
- Zerkleinern der Rohstofffraktion und
- Herstellen von Agglomeraten (A) durch Verdichten der zerkleinerten Rohstofffraktion.

Mit diesem Verfahren werden Agglomerate hergestellt, die als Bauzuschlagstoff weiterverwendet werden können, sodass eine für den Entsorger kostenträchtige thermische Verwertung nicht erforderlich ist. Beispielsweise können diese Agglomerate als Zuschlagstoff bei der Herstellung von Asphalt, insbesondere Kaltasphalt, eingesetzt werden. Diese Agglomerate können die herkömmlich aus Altpapier oder nachwachsenden Rohstoffen gewonnenen Pellets ersetzen, insbesondere auch ohne, dass zusätzliches Bindemittel benötigt wird. Das Rohmaterial, aus dem die Agglomerate des Bauzuschlagstoffes hergestellt werden, enthält im Unterschied zu herkömmlich verwendeten Material mit seinem Kunststoffanteil bereits das für den Zusammenhalt der Agglomerate erforderliche Bindemittel. Insofern wird bei diesem Bauzuschlagstoff in geschickter Weise eine durch den Verdichtungs- bzw. Komprimierungsprozess zum Herstellen der Agglomerate aus der zerkleinerten Rohstofffraktion eingebrachte Temperatur und die damit einhergehende Erweichung und teilweises Anschmelzen des Kunststoffanteils und dessen Verteilung genutzt. Für die Herstellung dieses Bauzuschlagstoffes ist es daher nicht erforderlich, ein zusätzliches Bindemittel für den Zusammenhalt der Agglomerate in die zu agglomerierende Rohstofffraktion einzubringen. Dadurch ist das Herstellungsverfahren vereinfacht, da weder ein Einbringen eines Bindemittels noch dessen Vermischung mit der Rohstofffraktion durchgeführt werden muss. Das ansonsten in aller Regel nur thermisch verwertete Primärmaterial wird somit zur Herstellung eines neuen Produktes - dem Bauzuschlagstoff - aufbereitet und muss nicht thermisch entsorgt werden.

Der Kunststoffanteil in PPK-Kunststoff-Verbundmaterial enthaltendem Siedlungsabfall ist durch die Art der üblichen Sortierung in aller Regel hinreichend gering, damit die durch die Aufbereitung daraus hergestellten Agglomerate des Bauzusatzstoffes trotz einer Verdichtung des Rohmaterials unter Ausbildung der pelletartigen Agglomerate eine beispielsweise für eine Verwendung desselben in einem Asphalt hinreichende Porosität beibehalten. Durch die Art der Sortierung ist aber auch sichergestellt, dass der Kunststoffanteil hinreichend groß ist, um aus der Rohstofffraktion verdichtete Pellets mit ausreichendem inneren Zusammenhalt für die Handhabung und weitere Verarbeitung zu agglomerieren.

Die Zerkleinerung und Homogenisierung der Rohstofffraktion erfolgt vorzugsweise in einer auch als Schredder bezeichneten Schneidmühle. In einem solchen Zerkleinerer wird die Rohstofffraktion nicht nur in die gewünschte Partikelgröße durch Schneiden zerkleinert, sondern zugleich werden die zerkleinerten Verbundpartikel zu Agglomeraten geformt. Diese Agglomerate sind nicht übermäßig verdichtet, sondern können durchaus eher als loser Verbund zerkleinerter Verbundpartikel vorliegen. Wenn eine höhere Verdichtung und damit einhergehend ein geringeres Porenvolumen gewünscht wird, auch damit die Agglomerate einen besseren inneren Zusammenhalt haben, können diese Agglomerate pelletiert werden. Diese werden dann nach ihrer Zerkleinerung einer Pelletieranlage zugeführt. Dabei werden diese Agglomerate durch eine Matritze mit Koller gepresst. Hierdurch werden die durch die Zerkleinerung hergestellten Agglomerate verdichtet (komprimiert), wobei der Kunststoffanteil intensiver innerhalb des Agglomerates verteilt wird. Über die Einstellung einer solchen Pelletieranlage, das heißt: Die Neigung der Matritze zum Koller lässt sich das Porenvolumen der Agglomeratpellets einstellen. Im Rahmen dieser Ausführung sind auch derartige Agglomeratpellets als Agglomerate angesprochen.

Für die Zwecke dieses Verfahrens weisen die Agglomerate eine durchschnittliche Größe von 5 mm bis 40 mm, insbesondere zwischen 15 mm und 30 mm auf. Eine zu kleine Größe wird jedenfalls für eine Verwendung der Agglomerate als Bauzuschlagstoff oder auch für eine weitergehende Behandlung als weniger geeignet angesehen. Die Bereitstellung von grö-ßeren Rohstofffraktionsagglomeraten wird in aller Regel zusätzliche Prozessschritte erfordern, die mit üblichen Schreddern nicht ohne weiteres erzielt werden können. Die Agglomeratgröße in der Rohstofffraktion weist in aller Regel ein enges Größenspektrum auf. Die vorgenannte Größenangabe bezieht sich auf die Kantenlänge der Agglomerate, die in einem solchen Schredder erzeugt werden.

PPK-Kunststoff-Verbundmaterial befindet sich in beträchtlichem Umfange in getrennt gesammeltem Siedlungsabfall. Daher ist Siedlungsabfall (Hausmüll, Verpackungsabfall) ein für die Durchführung des Verfahrens bevorzugtes Primärmaterial. Im Zuge einer Aufbereitung und Primärsortierung werden aus diesem soweit wie möglich diejenigen Bestandteile entfernt, die keine PPK-Kunststoff-Verbundmaterialien sind. Diese werden aus dem Materialstrom aussortiert und dann ihrer eigenen Wieder- bzw. Weiterverwendung zugeführt. Da bei einer solchen Sortierung, die vorzugsweise maschinell und somit vollautomatisch vorgenommen wird, in der aussortierten PPK-Kunststoff-Verbundmaterialfraktion auch nicht in einem Verbund befindliche Kunststoffteile enthalten sind, können diese Kunststoffbestandteile, genutzt werden, den durch die Kunststofffraktion gebildeten Bindemittelanteil in der Rohstofffraktion durch Entfernen eines Anteils dieser Kunststoffpartikel einzustellen. In aller Regel wird in der aussortierten Materialfraktion der Kunststoffanteil zu hoch sein, sodass durch das nachträgliche Aussortieren (Sekundärsortierung) von Kunststoff-Nicht-Verbundmaterialbestandteilen das gewünschte PPK-Kunststoff-Verhältnis eingestellt werden kann.

Besonders vorteilhaft an diesem Verfahren ist ferner, dass die Agglomerate aus PPK-Kunststoff-Verbundmaterial ein sehr geeignetes Ausgangsprodukt für eine Pyrolyse zum Herstellen von Pyrokohle (Koks) sind. Dabei behalten die Agglomerate ihren granulatförmigen Habitus. Daher eignet sich dieses poröse und leichtgewichtige Material ebenfalls als Bauzuschlagstoff, beispielsweise als Beimengung in Frischbeton. Zugleich dient das aus dem Frischbeton hergestellte Betonbauteil, beispielsweise ein Betonfertigbauteil als CO₂-Senke, was wiederum den CO₂-Fußabdruck einer solchen Betonstruktur signifikant verbessert.

Bei einer Durchführung des Verfahrens mit einer Pyrolyse der Agglomerate wird das Verfahrensprodukt - die Pyrokohle (Koks) - über die Ausbildung der der Pyrolyse zuzuführenden Rohstofffraktion vorkonditioniert. Dieses erfolgt dadurch, dass die Rohstofffraktion weitestgehend nur PPK und Kunststoff als PPK-Kunststoff-Verbundmaterial enthält, welches vor seiner thermischen Behandlung zerkleinert und homogenisiert wird. Wenn körnige Pyrokohle hergestellt werden soll, wird die Rohstofffraktion nach dem Homogenisieren oder zusammen mit diesem Vorgang, welches durchaus ein Vorgang mit dem Zerkleinern sein kann, zu Agglomeraten geformt. Durch das Homogenisieren der Rohstofffraktion wird eine gleichmäßige Verteilung der Kunststoffpartikel innerhalb der PPK-Fraktion erreicht. Bei einer Ausbildung von Agglomeraten befinden sich sodann innerhalb derselben ebenfalls Kunststoffpartikel. Bei der Pyrolyse werden diese zersetzt und sorgen für zusätzlichen Hohlraum in der Pyrokohle.

Für die Beheizung des Pyrolysereaktors wird das bei der Pyrolyse entstehende Pyrolysegas genutzt, sodass dieser nach einem anfänglichen Aufheizen mit Fremdgas autotherm betrieben werden kann. Da die Pyrolysegasausbeute der Kunststoffpartikel größer ist als bei der PPK-Fraktion, ist für eine Beheizung des Pyrolyseraktors der Kunststoffanteil in der Rohstofffraktion nicht unwesentlich. Die nicht vergasende Bestandteile der Rohstofffraktion werden mit Ausnahme der Metallbestandteile durch die Pyrolyse zu Pyrokohle (Carbon Black) umgewandelt. Die Pyrolyse verläuft unter Sauerstoffabschluss, jedenfalls mit einem deutlichen Sauerstoffunterschuss. Der Vorgang des Pyrolisierens wird typischerweise derart durchgeführt, dass die Agglomerate innerhalb des Pyrolysereaktors nicht zerfallen. Damit ist die Größe der Pyrokohleaggregate durch die Größe der zuvor gebildeten Rohstofffraktions-Agglomerate vorgegeben. Somit wird über die Größe der Agglomerate der Rohstofffraktion Einfluss auf die Größe der Pyrokohlepartikel genommen. Derartige körnige, insbesondere grobkörnige Pyrokohle eignet sich aufgrund seiner Eigenschaften, auch aufgrund seiner durch die Einlagerung der Kunststoffpartikel in den Agglomeraten der Rohstofffraktion besonderen Porosität als Kohlenstoffsenke, und zwar in einer Verwendung als Bauzuschlagstoff. Der Kohlenstoff ist in einem solchen Produkt dauerhaft eingelagert. Verwendet als Bauzuschlagstoff ist dieses Material dann dauerhaft einem Kohlenstoffkreislauf entzogen. Gute Erfahrungen mit einem Einsatz von körniger Pyrokohle, die nach dem vorbeschriebenen Verfahren hergestellt worden ist, hat man bei Asphaltmischungen, insbesondere bei Kaltasphaltmischungen, ebenso gemacht, wie bei Betonmischungen.

Die Nutzung von Bauwerken oder Bauwerksteilen, sei es eine Straße im Falle eines Einbringens der Pyrokohle in eine Asphaltmischung oder ein Gebäude oder ein Bauelement zum Speichern von Kohlenstoff verbessert in erheblichem Maße den CO₂-Fußabdruck des Produktes. Neben einer Nutzung eines solchen Bauwerkes als Kohlenstoffsenke werden auch die Eigenschaften des Bauwerkes durch einen derartigen Bauzuschlagstoff verbessert. Bei einer Nutzung als Zuschlagsstoff für Asphalt, insbesondere Kaltasphalt, wird hierdurch seine Beständigkeit, vor allem auch mit Blick auf thermisch indizierte Spannungen verbessert. Eine Verwendung von etwa 2% Pyrokohle in Kaltasphalt macht die Herstellung desselben bereits klimaneutral. Um Beton klimaneutral herzustellen, wird ein Zuschlag an Pyrokohle von 4 bis 5% als ausreichend angesehen, damit ein solches Bauwerk oder ein solchen Betonbauteil als "klimaneutral hergestellt" bezeichnet werden kann. Eingebracht in eine Betonstruktur, wie beispielsweise ein Betonfertigbauteil, werden durch das eingebrachte Pyrokohle-Granulat aufgrund der Porosität dieses Materials die Wärmedämmeigenschaften verbessert.

Das vorbeschriebene Verfahren bietet die Möglichkeit, Einfluss auf die Beschaffenheit der gewonnenen Pyrokohle zu nehmen. So können die durch den Zerkleinerungs- und Homogenisierungsprozess gewonnenen Agglomerate einer Pyrolyse unterworfen werden. Aufgrund des eher geringeren inneren Zusammenhaltes ergibt sich hieraus eine feinkörnige Pyrolysekohle. Werden hingegen Agglomerate einer Pyrolyse unterworfen, die nach einer ersten Agglomeration durch den Zerkleinerungsprozess einem anschließenden Pelletierprozess unterworfen sind, ist die daraus gewonnene Pyrokohle grobkörnig und entspricht vom Habitus her dem Habitus der der Pyrolyse unterworfenen Agglomerate.

Das Bereitstellen der Rohstofffraktion hinsichtlich des darin enthaltenen PPK- bzw. Kunststoff-Anteils erfolgt gemäß einer bevorzugten Ausgestaltung des Verfahrens dergestalt, dass die Menge des durch die Pyrolyse gewonnen Pyrolysegases zum einen zum Beheizen des Pyrolysereaktors ausreicht, jedoch nicht so viel Pyrolysegas durch die Pyrolyse erzeugt wird, dass die durch das Verbrennen des Pyrolysegases erzeugte Wärmemenge die zum Beheizen des Pyrolysereaktors benötigte Wärmemenge deutlich überschreitet. Die Rest- bzw. Überschusswärme, die durch das Verbrennen der Pyrolysegase gewonnen und zum Beheizen des Pyrolysereaktors nicht verwendet wird, wird vorzugsweise einer dem Pyrolysereaktor nachgeschalteten Wärmesenke zugeführt. Hierbei kann es sich um andere, Wärme benötigende Aggregate durchaus auch im Zusammenhang mit der Aufbereitung des angelieferten Siedlungsabfalls handeln. Diese Rest- oder Überschusswärme kann auch für Heizzwecke, etwa zum Beheizen von Gebäuden, verwendet werden. Nutzbar macht man sich diese Rest- bzw. Überschusswärme zweckmäßiger Weise über einen oder auch mehrere Wärmetauscher, durch die die Wärme aus dem Heizgas auf das weitere Nutzmedium übertragen wird.

Der Kunststoffanteil in der Rohstofffraktion beträgt vorzugsweise weniger als 30%, insbesondere weniger als 20%. Typischerweise ist bereits ein Kunststoffanteil von 5 bis 15% ausreichend, um bei einer Durchführung des Verfahrens mit anschließender Pyrolyse den Pyrolysereaktor autotherm betreiben zu können. Zum Anlaufenlassen des Pyrolysereaktors wird der Brenner zunächst mit einem externen Brenngas betrieben, beispielsweise Erdgas, allerdings nur solange bis hinreichend Pyrolysegas aus dem Pyrolysereaktor für den Betrieb des Brenners abgezogen werden kann. Höhere Kunststoffanteile führen zu einer höheren Pyrolysegasausbeute und damit zu einer höheren, für die Pyrolyse nicht benötigten Wärmemenge.

Der Pyrolysereaktor selbst ist vorzugsweise als Durchlaufreaktor ausgelegt, beispielsweise betrieben mit einem oder mehreren Schneckenförderern zum Transportieren der Rohstofffraktion. Eingebracht wird die zerkleinerte und typischerweise zu Agglomeraten geformte Rohstofffraktion über eine Zellenschleuse, um den Sauerstoffeintrag in den Pyrolysereaktor gering zu halten. Der Pyrolysereaktor ist typischerweise indirekt beheizt. Dies bedeutet, dass der Pyrolysereaktor doppelwandig ausgeführt ist, wobei das Heizgas dem Zwischenraum zwischen einem äußeren Mantel und dem inneren, die Pyrolysekammer einfassenden Mantel geleitet wird. Die Pyrolyse kann durchaus auch batchweise durchgeführt werden.

Einfluss genommen werden kann auf die Zusammensetzung der Rohstofffraktion durch Entfernen von unter Umständen darin enthaltenen Kunststoffpartikeln, die nicht in einem Materialverbund mit PPK sind. Sollte der Kunststoffanteil in der Rohstofffraktion zu gering sein, um die für die Beheizung des Pyrolysereaktors notwendige Pyrolysegasmenge zu erzeugen, können zusätzliche Kunststoffteile bzw. Kunststoffpartikel in die Rohstofffraktion eingebracht werden. Dasselbe lässt sich mittels einer Variation im PPK-Anteil erzielen.

Das Pyrolysegas wird zweckmäßigerweise flammenlos verbrannt (oxidiert). Für diese Zwecke wird ein FLOX-Brenner eingesetzt. Eine solche thermische Verwertung der Pyrolysegase hat zum Vorteil, dass hierdurch der Stickoxidausstoß minimiert ist. Zudem sind die erzielbaren Temperaturen geringer als bei einem Verbrennungsprozess mit Flamme. In geschickter Weise wird durch einen solchen flammenlosen Brenner der Umstand ausgenutzt, dass für die Beheizung des Pyrolysereaktors nicht die hohen Temperaturen eines Verbrennungsvorganges mit Flamme benötigt werden. Der Pyrolyseprozess wird vorzugsweise als Mitteltemperaturpyrolyse mit einer Temperatur zwischen 500°C und 700°C durchgeführt. In diesem Temperaturfenster wird bei dem gewünschten Durchsatz eine Inkohlung auf ein C/H-Verhältnis von weniger als 0,3 erzielt. Ein solcher Inkohlungsgrad wird für die weitere Verwendung der Pyrokohle gewünscht. Diese hat dann die für den bereits vorstehend angesprochenen beispielhaften Einsatz als Bauzuschlagstoff benötigte Härte und gewünschte Oberfläche. Die Dauer der Pyrolyse, das heißt der Aufenthalt der Rohstofffraktion in dem Pyrolysereaktor beträgt bei der vorstehend angegebenen Größe der Rohstofffraktionsagglomerate typischerweise 3 bis 6 Stunden.

Nachstehend ist die Erfindung anhand eines Ausführungsbeispiels und unter Bezugnahme auf die beigefügten Figuren beschrieben. Es zeigen:

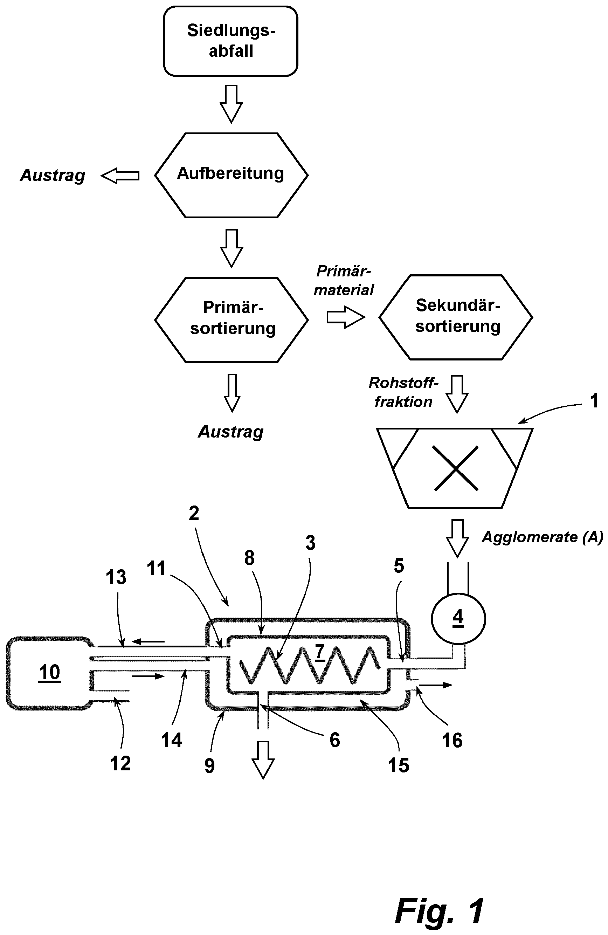

- **Fig. 1:**: Ein Flussdiagramm zum Erläutern des erfindungsgemäßen Herstellungsverfahrens zum Herstellen von körniger Pyrokohle aus PPK-Kunststoff-Verbundmaterial,
- **Fig. 2:**: eine Fotografie der durch Schreddern erzeugten Rohstofffraktion mit seinen Agglomeraten,
- **Fig. 3:**: eine Strichzeichnung der in der Fotografie der Figur 2 enthaltenen Agglomerate,
- **Fig. 4:**: eine Fotografie der Agglomerate der Figur 2 nach einem Pelletisieren und
- **Fig. 5:**: eine Fotografie der pyrolysierten Agglomerate der Figur 4.

Zum Herstellen eines körnigen bzw. granulatförmigen Bauzuschlagstoffes dient als Ausgangsmaterial ein PPK-Kunststoff-Verbundmaterial, bei dem es sich bei dem dargestellten Ausführungsbeispiel um ausgediente PPK-Kunststoff-Verpackungen handelt, die durch mehrere Prozessschritte aus getrennt gesammeltem Siedlungsabfall heraussortiert worden sind. Mit dem Verfahren werden Agglomerate, die auch als Pellets bezeichnet werden können, hergestellt. Die in dem PPK-Kunststoff-Verbundmaterial enthaltene Kunststofffraktion wird hierbei in geschickter Weise als Bindemittel genutzt.

Zum Bereitstellen einer Rohstofffraktion, die weitgehend nur PPK und Kunststoff als Verbundmaterial enthält und aus der die Agglomerate hergestellt werden, wird der bei einer Haushaltsmüllsammlung anfallende Siedlungsabfall in mehreren Stufen aufbereitet und sortiert, um die für die Rohstofffraktion gewünschten PPK-Kunststoff-Verpackungen, typischerweise Leichtverpackungen von anderen, im Abfall enthaltenen Materialien zu trennen. Die getrennt gesammelten Siedlungsabfälle werden in einem ersten Schritt einer Aufbereitung gesiebt, um größere Bestandteile, wie beispielsweise Folien ebenso aus dem Materialstrom zu entfernen, wie feinkörniges Material. Hierzu wird der angelieferte Abfall einer entsprechenden Siebung unterworfen, sodass bei dem dargestellten Ausführungsbeispiel der für die weitere Sortierung vorgesehene Materialstrom eine mittlere Korngröße von etwa 50 mm bis 300 mm aufweist.

Der angelieferte Siedlungsabfall wird auch durch Entfernung von nicht gewünschten Materialien aufbereitet. Leichtstoffe, wie beispielsweise Styropor, werden abgesaugt; Fe-Metalle werden magnetisch aus dem Materialstrom entfernt. In einem nächsten Schritt werden beispielsweise mit einem Nahinfrarotabscheider (NIR-Abscheider) Getränkeverbunde aus dem Materialstrom entfernt. NE-Metalle werden typischerweise unter Verwendung von Wirbelstromabscheidern ebenfalls aus dem Materialstrom entfernt. Aus dem um diese Stoffe bereinigten Materialstrom werden anschließend polymere Kunststoffmaterialien mittels eines weiteren Nahinfrarotabscheiders aussortiert. Entfernt werden auf diese Weise aus dem Materialstrom typischerweise PE, PP, PET und PS. Diese dem Materialstrom entnommenen Stoffe werden, nach Sorten getrennt, einem weiteren Recycling zugeführt.

Hat der Materialstrom diese Aufbereitung durchlaufen, werden aus dem verbliebenen Material die PPK-Kunststoff-Verpackungen abgetrennt, typischerweise ebenfalls mittels eines Nahinfrarotabscheiders. Dieser Schritt ist im Rahmen dieser Ausführungen als Primärsortierung angesprochen. Bei dieser Sortierung lässt es sich verfahrensbedingt kaum vermeiden, dass auch Kunststoffbestandteile, die nicht mit PPK in einem Verbund gebunden sind, in die Zielfraktion sortiert werden. Grundsätzlich könnte dieser Materialstrom auch ohne eine weitere Sortierung - einer sogenannten Sekundärsortierung - den weiteren Prozessschritten unterworfen werden. Wenn man allerdings bestrebt ist, eine bei einer kontinuierlichen Herstellung der Agglomerate gleichbleibende Qualität zu erhalten, wird die Sekundärsortierung durchgeführt, um den Kunststoffanteil in der in den weiteren Verfahrensschritten zuzuführenden Rohstofffraktion typischerweise durch Entfernen von nicht im Verbund stehenden Kunststoffpartikeln aus dem Materialstrom einzustellen. Auch können durch die Sekundärsortierung nicht gewünschte Stoffe oder Bestandteile, wie etwa potentielle Schadstoffe oder Metalle ausgeschleust werden.

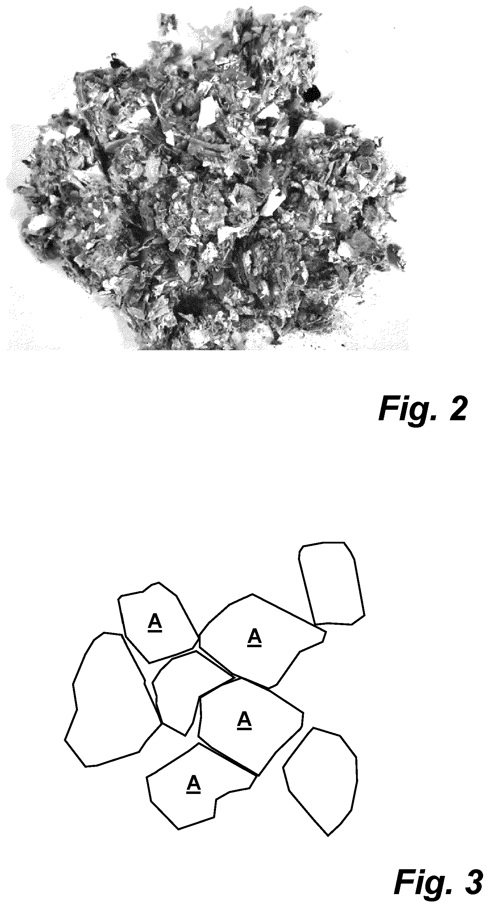

Die Sekundärsortierung dient vornehmlich dem Zweck, das PPK-Kunststoff-Verhältnis in der Rohstofffraktion einzustellen. Die Rohstofffraktion, die den weiteren Verfahrensschritten unterworfen wird, enthält bei dem dargestellten Ausführungsbeispiel weniger als 15% Kunststoffanteil. Die Sekundärsortierung wird bei dem dargestellten Ausführungsbeispiel durchgeführt, um einen Kunststoffanteil in der Rohstofffraktion von 10 bis 12% zu erhalten. Die auf diese Weise bereitgestellte Rohstofffraktion wird anschließend in einem Schredder 1 zerkleinert. Bei dem Schredder 1 handelt es sich um eine Schneidmühle, in der das zugeführte Material - die Rohstofffraktion - durch Schneiden zerkleinert wird. Der Schredder 1 kann ein oder zwei Rotoren aufweisen. Zugleich erfolgt in diesem Zerkleinerungsschritt eine Homogenisierung der Rohstofffraktion und eine Agglomeratbildung. Die Größe der Agglomerate A bei dem dargestellten Ausführungsbeispiel beträgt etwa 22 bis 26 mm. Hierbei handelt es sich um die durchschnittliche Kantenlänge der durch das Schreddern gebildeten Agglomerate A'. Figur 2 zeigt in einer bildlichen Wiedergabe Agglomerate der Rohstofffraktion. Zur Verdeutlichung der in Figur 2 gezeigten und durch die Zerkleinerung gebildeten Agglomerate A sind diese in Figur 3 anhand ihrer Umrisse als Strichzeichnung gezeigt.

Bei dem beschriebenen Verfahren werden die durch den Zerkleinerungsprozess gebildeten Agglomerate A zusätzlich pelletisiert, wodurch durch das Zusammenspiel von Matritze und Koller einer solchen Pelletisieranlage die Agglomerate A verdichtet werden. Dieses fördert aufgrund der damit einhergehenden weiteren Verteilung der Kunststoffbestandteile in jedem Agglomerat A den inneren Zusammenhalt. Die auf diese Weise gewonnenen Agglomerate A' sind in einer Fotografie in Figur 3 gezeigt. Die PelletForm ist darin deutlich zu erkennen.

Diese Agglomerate A bzw. A' können als Bauzuschlagstoff eingesetzt werden. Je nach dem vorgesehenen Einsatzzweck werden die Agglomerate A oder die pelletisierten Agglomerate A - die Agglomerate A' - hierfür genutzt. Der Verbund der PPK-Bestandteile innerhalb der Agglomerate erfolgt durch den in der Rohstofffraktion und somit auch in den Agglomeraten enthaltenen und durch den Verdichtungsprozess an die einzelnen Partikel angebundenen Kunststoffbestandteil. Aufgrund eines Kunststoffanteils von 10 bis 12 % - ein bevorzugter Anteil - verfügen diese Agglomerate über eine hinreichende Porosität und damit einhergehende Saugfähigkeit, dass sich diese vor allem auch zur Verwendung als Zuschlagstoff für Asphalte, insbesondere Kaltapshalte, zur Ausbildung von Straßenbelägen eignet.

An die vorbeschriebenen Verfahrensschritte schließt sich bei dem dargestellten Ausführungsbeispiel ein weiterer Verfahrensschritt zur Herstellung eines pyrolisierten Bauzuschlagstoffes (Pyrokohle) an, und zwar eine Pyrolyse. Bei dem dargestellten Ausführungsbeispiel sind die Agglomerate A' das Ergebnis einer sich an den Pelletierschritt anschließenden Pyrolyse.

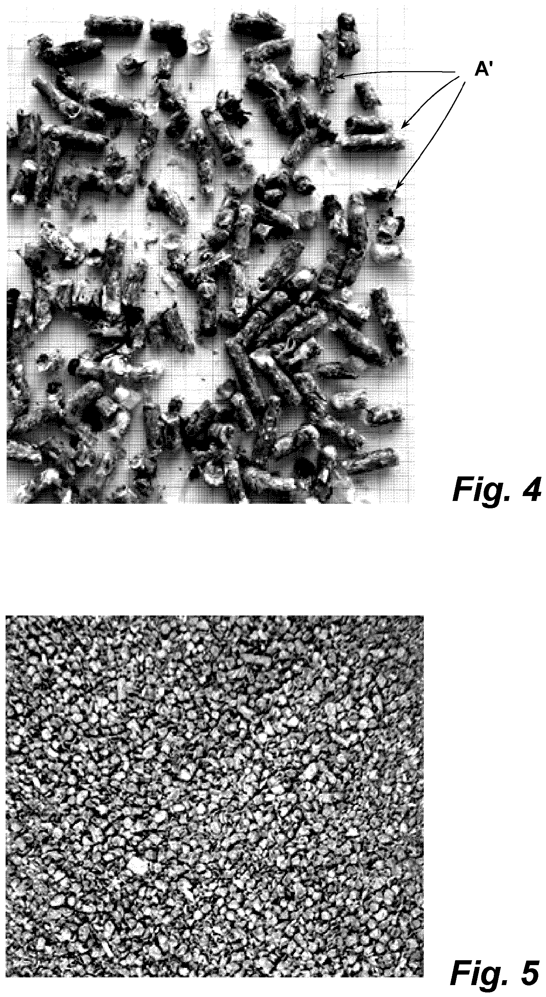

Die Pyrolyse der Agglomerate A' der Rohstofffraktion wird in einem Pyrolysereaktor 2 durchgeführt. Der Pyrolysereaktor 2 wird im Durchlauf betrieben, sodass die Agglomerate A' der Rohstofffraktion kontinuierlich in den Pyrolysereaktor 2 eingebracht und aus diesem nach Erreichen des vorgesehenen Inkohlungsgrades wieder entnommen werden. Der Pyrolysereaktor 2 verfügt über ein oder mehrere Förderschnecken 3, mit denen die darin eingebrachten Agglomerate A' der Rohstofffraktion durch diesen hindurch gefördert werden. Der Pyrolysereaktor 2 ist an den Ausgang des Schredders 1 angeschlossen. Eine in die Agglomeratzuführung eingeschaltete Zellenschleuse 4 sorgt dafür, dass mit dem Eintrag der Rohstofffraktionsagglomerate nur ein Minimum an Sauerstoff in das Innere des Pyrolysereaktors - in seine Pyrolysekammer - eindringt. Die thermische Behandlung der Rohstofffraktionsagglomerate erfolgt in dem Pyrolysereaktor ohne Sauerstoff, zumindest jedoch mit einem deutlichen Sauerstoffunterschuss. Die Eingangsöffnung des Zuflusses der Agglomerate A' der Rohstofffraktion ist in der Figur mit dem Bezugszeichen 5 kenntlich gemacht. Über eine Ausgangsöffnung 6 werden die pyrolysierten Rohstofffraktionsagglomerate als Pyrokohle entnommen und der vorgesehenen weiteren Verwendung zugeführt. Bei dem dargestellten Ausführungsbeispiel, bei dem die Pyrokohle als Bauzuschlagstoff verwendet wird, wird diese nach Entnahme aus dem Pyrolysereaktor 2 und ggf. einer Zwischenlagerung in Säcke verpackt. Figur 5 zeigt eine Fotografie von auf diese Weise durch die Pyrolyse der Agglomerate A' gewonnenen Pyrokohle als körniger Bauzuschlagstoff (Schüttgut).

Die Größe der Agglomerate A' gibt die Größe der in dem nachfolgenden Pyrolyseschritt gebildeten körnigen Pyrokohle vor. Je grobkörniger die Agglomerate A' sind, desto grobkörniger wird die daraus hergestellte Pyrokohle. Die Größe der Körnigkeit der Pyrokohle wird man in Abhängigkeit von dem vorgesehenen Verwendungszweck durch entsprechende Größe der Agglomerate A' einstellen. Bei dem in den Figuren dargestellten Ausführungsbeispiel dient die mit dem Verfahren hergestellte Pyrokohle als Bauzuschlagstoff. Eine durchschnittliche Korngröße von etwa 18 mm bis 23 mm ist für diese Zwecke bei dem dargestellten Ausführungsbeispiel als Zielvorgabe für die körnige Pyrokohle vorgesehen.

Die auf diese Weise hergestellte Pyrokohle weist aufgrund der Porosität der Agglomerate A' als Ausgangsprodukt für die Pyrolyse eine besonders hohe Porosität auf und ist daher besonders leichtgewichtig.

Die Pyrolyse wird als autothermer Prozess durchgeführt. Der Pyrolysereaktor 2 ist doppelwandig konzipiert, wobei der Pyrolysekammer 7 derjenige Hohlraum ist, in dem die zumindest eine Förderschnecke 3 angeordnet ist. Das die Pyrolysekammer 7 einfassende innere Gehäuse 8 ist seinerseits durch ein äußeres Gehäuse 9 eingefasst, wobei zwischen den beiden Gehäusen 8, 9 eine Wegsamkeit verbleibt, durch die heißes Gas zum indirekten Beheizen der Pyrolysekammer 7 hindurchgeleitet wird. Zum Erzeugen des für die Beheizung der Pyrolysekammer 7 benötigten Heizgases dient ein Brenner 10. Der Brenner 10 wird, hat der Pyrolysereaktor 2 einmal seine Betriebstemperatur, erreicht ausschließlich mit aus der Pyrolysekammer 7 durch eine Abgasöffnung 11 abgeführtem Pyrolysegas betrieben. Bereits bei relativ niedrigen Temperaturen entweichen aus den Kunststoffbestandteilen der Rohstofffraktion brennbare Pyrolysegase. Die durch den Betrieb des Brenners 10 im Zuge des Verbrennens der aus der Pyrolysekammer 7 abgezogenen Pyrolysegase erzeugte Wärme ist hinreichend, oftmals sogar deutlich mehr als für das Beheizen der Pyrolysekammer 7 erforderlich ist. Daher kann der Betrieb des Pyrolysereaktors 2 als autotherm beschrieben werden. Allein zum Anfahren des Pyrolysereaktors 2 wird über eine Brenngaszufuhr 12 Brenngas zugeführt, solange bis der über eine Pyrolysegasleitung 13 aus der Pyrolysekammer 7 abgezogene Pyrolysegasstrom für den Betrieb des Brenners 10 ausreichend ist. In die Pyrolysegasleitung 13 kann eine Reinigungseinrichtung zum Reinigen des abgezogenen Pyrolysegases, beispielsweise als Filter ausgeführt, eingeschaltet sein. Das heiße Abgas des Brenners 10 wird über eine Heizleitung 14 in den das innere Gehäuse 8 umgebenden Mantelraum 15 eingebracht. Über einen Ausgang 16 tritt der Heizgasstrom mit der darin enthaltenen Restwärme aus dem Mantelraum 15 aus. Die darin noch enthaltene Wärme kann einer weiteren Verwendung zugeführt werden. Diese kann beispielsweise über einen Wärmetauscher auf ein anderes Medium übertragen werden.

Die Pyrolyse der Rohstofffraktion wird bei dem dargestellten Ausführungsbeispiel bei einer Temperatur von 600°C ± 10°C durchgeführt. Bei dieser Temperatur lassen sich gute Umsetzungsraten erzielen. Somit ist bei dem dargestellten Ausführungsbeispiel der Pyrolysereaktor 2 beziehungsweise seine Pyrolysekammer 7 auf einer Temperatur von etwa 600°C gehalten. Für die Zwecke einer hinsichtlich ihrer Qualität gleichbleibenden Pyrokohle wird die Temperatur in der Pyrolysekammer 7 so gut wie möglich konstant gehalten.

Vor dem Hintergrund, dass die für die Pyrolyse benötigte Temperatur nicht übermäßig hoch ist, handelt es sich bei dem Brenner 10 des dargestellten Ausführungsbeispiels um einen sogenannten flammenlosen Brenner. Dieser arbeitet somit nach dem sogenannten FLOX-Verfahren. Die damit erzeugbare Temperatur ist zwar geringer als die Temperaturen, die mit einem Flammenbrenner erzeugt werden. Allerdings sind derartig hohe Temperaturen für die Pyrolyse nicht erforderlich. Zudem ist bei einem flammenlosen Brenner der Stickoxidausstoß auf ein absolutes Minimum reduziert.

Die bei dem dargestellten Ausführungsbeispiel auf diese Weise aus Siedlungsabfall hergestellte körnige Pyrokohle wird als Bauzuschlagstoff eingesetzt, insbesondere in Kaltasphaltmischungen oder in Betonbauteilen oder -bauwerken. Damit wird Kohlenstoff eingelagert und dauerhaft dem Kreislauf entnommen, was sich positiv auf den CO₂-Fußabdruck des Bauwerkes auswirkt.

Das vorstehend beschriebene Verfahren ist bezüglich seiner grundsätzlichen Verfahrensschritte vorgestellt worden. Selbstverständlich können in dieses, weitere Schritte, insbesondere auch zum Betrieb des Pyrolysereaktors vorgesehen sein.

Von Besonderheit bei diesem Verfahren ist, dass aus dem herkömmlich nur sehr aufwendig verwertbaren, im Siedlungsabfall befindlichen Bestandteilen körnige Pyrokohle gewonnen werden kann.

Die vorbeschriebene Pyrolyse mit den Agglomeraten A' als Ausgangsprodukt kann gleichermaßen mit den Agglomeraten A durchgeführt werden.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Schredder (Schneidmühle)
- 2: Pyrolysereaktor
- 3: Förderschnecke
- 4: Zellenschleuse
- 5: Eingangsöffnung
- 6: Ausgangsöffnung
- 7: Pyrolysekammer
- 8: Gehäuse
- 9: Gehäuse
- 10: Brenner
- 11: Pyrolysegasöffnung
- 12: Brenngaszufuhr
- 13: Pyrolysegasleitung
- 14: Heizleitung
- 15: Mantelraum
- 16: Ausgang
- A, A': Agglomerat

## Patentansprüche

1. Verfahren zur Aufbereitung von PPK-Kunststoff-Verbundmaterial, wie Verbundverpackungen aus Siedlungsabfall, mit folgenden Schritten:
- Sortieren eines Primärmaterials und Bereitstellen einer für die weitere Verarbeitung vorgesehenen, zumindest weitgehend nur PPK und Kunststoff enthaltenden Rohstofffraktion mit einem gegenüber dem Kunststoffanteil höheren PPK-Anteil,
- Zerkleinern der Rohstofffraktion und
- Herstellen von Agglomeraten (A, A') durch Verdichten der zerkleinerten Rohstofffraktion.

2. Verfahren nach Anspruch 1, **dadurch gekennzeichnet, dass** der Schritt des Verdichtens der Rohstofffraktion zum Herstellen der Agglomerate (A, A') dergestalt durchgeführt wird, dass die durch den Verdichtungsprozess eingebrachte Wärme die Schmelztemperatur des Kunststoffanteils nicht überschreitet.

3. Verfahren nach Anspruch 1 oder 2, **dadurch gekennzeichnet, dass** der Schritt des Herstellens der Agglomerate (A) durch Verdichten der zerkleinerten Rohstofffraktion im Zuge des Prozessschrittes des Zerkleinerns erfolgt.

4. Verfahren nach Anspruch 3, **dadurch gekennzeichnet, dass** die durch den Zerkleinerungsprozess hergestellten Agglomerate (A) zur Ausbildung von weiter verdichteten Agglomeraten (A') pelletisiert werden.

5. Verfahren nach einem der Ansprüche 1 bis 4 **dadurch gekennzeichnet, dass** der Zerkleinerungs- und Agglomerationsprozess dergestalt durchgeführt wird, damit die durchschnittliche Größe der Agglomerate 5 mm bis 40 mm, insbesondere 15 mm bis 25 mm beträgt.

6. Verfahren nach einem der Ansprüche 1 bis 5, **dadurch gekennzeichnet, dass** der Schritt des Bereitstellens der Rohstofffraktion durchgeführt wird, damit die Rohstofffraktion einen Kunststoffanteil von weniger als 30%, insbesondere von weniger als 20% enthält.

7. Verfahren nach einem der Ansprüche 1 bis 6, **dadurch gekennzeichnet, dass** die Agglomerate (A, A') zum Herstellen von Pyrokohle (Carbon Black) in einem Pyrolysereaktor (2) pyrolisiert werden, wobei die bei der Pyrolyse erzeugten Pyrolysegase aus dem Pyrolysereaktor (2) abgezogen und zum Beheizen des Pyrolysereaktors (2) flammenlos verbrannt werden.

8. Verfahren nach Anspruch 7, **dadurch gekennzeichnet, dass** zumindest anteilig über den Kunststoffanteil in der Rohstofffraktion die Beheizung des Pyrolysereaktors (2) gesteuert wird.

9. Verfahren nach Anspruch 7 oder 8, **dadurch gekennzeichnet, dass** die Pyrolyse durchgeführt wird, damit die Pyrokohle als Pyrolyseprodukt einen Inkohlungsgrad (H/C-Verhältnis) von weniger als 0,3 insbesondere von weniger als 0,25 aufweist.

10. Verfahren nach einem der Ansprüche 7 bis 9, **dadurch gekennzeichnet, dass** die Pyrolyse als Mitteltemperaturpyrolyse bei einer Temperatur zwischen 500°C und 700°C durchgeführt wird.

11. Verfahren nach einem der Ansprüche 7 bis 10, **dadurch gekennzeichnet, dass** mit der durch Verbrennen des Pyrolysegases gewonnenen Wärme die Pyrolysekammer (7) des Pyrolysereaktors (2) indirekt erwärmt wird.

12. Verfahren nach einem der Ansprüche 1 bis 11, **dadurch gekennzeichnet, dass** als Primärmaterial getrennt gesammelter Siedlungsabfall mit einem Anteil an ausgedientem PPK-Kunststoff-Verbundmaterial eingesetzt wird.

13. Verwendung von Agglomeraten (A, A'), hergestellt mit dem Verfahren nach einem der Ansprüche 1 bis 11 als Bauzuschlagstoff, wobei die Agglomerate (A, A') dem noch nicht verfestigten Baustoff beigemengt werden.

14. Verwendung nach Anspruch 13, insbesondere in seinem Rückbezug auf einen der Ansprüche 1 bis 5, **dadurch gekennzeichnet, dass** die Agglomerate (A, A') als Zuschlagstoff in eine Asphaltmischung, insbesondere eine Kaltasphaltmischung eingebracht werden.

15. Verwendung von körniger Pyrokohle, hergestellt mit dem Verfahren nach einem der Verfahren 7 bis 12, indem diese als Zuschlagstoff in eine Frischbetonmischung eingebracht werden.

16. Zuschlagsstoff für Kaltasphalt und Frischbetonmischungen, der aus PPK-Kunststoff-Verbundmaterial zu Agglomeraten (A, A') geformt ist.
